# EUROPÄISCHE PATENTSCHRIFT

(11) **EP 2 481 943 B1**
(45) Veröffentlichungstag und Bekanntmachung des Hinweises auf die Patenterteilung: **08.05.2013**
(21) Anmeldenummer: 12000510.3
(22) Anmeldetag: 26.01.2012
(51) Int. Cl.: F16D 57/00, F16D 33/20

(54) **Hydrodynamische Maschine, insbesondere hydrodynamischer Retarder**
Hydrodynamic machine, in particular hydrodynamic retarder
Machine hydrodynamique, notamment retardateur hydrodynamique

(30) Priorität: 31.01.2011 DE 102011009910
(43) Veröffentlichungstag der Anmeldung: 01.08.2012
(73) Patentinhaber: Voith Patent GmbH, 89522 Heidenheim (DE)
(72) Erfinder: Richter, Herbert, 73432 Aalen (DE)
(74) Vertreter: Schmidt, Sven Hendrik

(56) Entgegenhaltungen:
- AT-B- 228 830
- DE-A1- 4 446 287
- DE-A1- 10 303 414
- DE-C- 642 008
- GB-A- 1 388 181

## Beschreibung

Die vorliegende Erfindung betrifft eine hydrodynamische Maschine, insbesondere einen hydrodynamischen Retarder, mit einer Ventilationsblende, die bei ausgeschalteter hydrodynamischer Maschine den Strömungsquerschnitt des Arbeitsraumes zumindest teilweise versperrt und beim Einschalten der hydrodynamischen Bremse aus dem Arbeitsraum ausrückbar ist, um den Strömungsquerschnitt des Arbeitsraumes für das Arbeitsmedium wieder vollständig oder nahezu vollständig freizugeben. Im Einzelnen wird auf den Oberbegriff von Anspruch 1 verwiesen.

Ventilationsblenden für hydrodynamische Maschinen, die insbesondere bei hydrodynamischen Retardern zum Einsatz kommen, sind seit Jahrzehnten bekannt. Beispielsweise wird auf die Druckschriften DE 29 27 582, DE 19 42 475 und DE 22 09 446 verwiesen. Die dort vorgeschlagenen Ventilationsblenden weisen jeweils eine Vielzahl von schwenkbaren Blendensegmenten auf, die an einem Ende über einer Drehachse drehbar gelagert sind und somit mit ihrem anderen Ende durch Verdrehen der Blendensegmente mehr oder minder radial von außen in den Arbeitsraum einschwenkbar sind. Nachteilig bei solchen einschwenkbaren Segmenten sind zum einen die erforderlichen großen Kräfte für den Einschwenkvorgang. Ferner muss die Herstellung der Blenden sehr genau erfolgen und meist sind Lötverbindungen zwischen verschiedenen Bauteilen erforderlich, was die Herstellungskosten steigert. Schließlich erfordert die Belastung der Blenden eine vergleichsweise massive Ausführung der einzelnen Segmente, um ein unerwünschtes Verbiegen oder Verkippen zu vermeiden.

Andere Ventilationsblenden sind bekannt geworden, siehe beispielsweise DE 21 35 268 und DE 19 38 092, die aus elastischen Zungen hergestellt sind oder in den Arbeitsraum einkippbar sind, um im eingeschalteten Zustand des hydrodynamischen Retarders, der mit einer solchen Ventilationsblende ausgerüstet ist, in Richtung der Arbeitsraumwand zur Seite zu kippen, um den Strömungsquerschnitt für die Arbeitsmediumströmung freizugeben, und im ausgeschalteten Zustand des hydrodynamischen Retarders radial in den Arbeitsraum hineinzuragen. Auch die Herstellung sowie ein Sicherstellen einer sicheren Funktionsweise dieses Ventilationsblendentyps hat sich als kostenintensiv erwiesen.

Hydrodynamische Maschinen mit Blenden, welche in den Trennspalt zwischen zwei in Axialrichtung gegenüberstehenden Schaufelrädern einbringbar sind, sind aus
DE 14 75 389 A
US 6 928 811 B2
US 2 336 838 A
DE 11 97 698 A
DE 103 03 414 A
AT 228 830 B
GB 1 388 181 A
bekannt.

Schließlich wurden in der Praxis Ventilationsblenden getestet, die nach dem Irisblenden-Prinzip arbeiten. Auch diese Blenden sind teuer in der Herstellung und problematisch im Einsatz.

Der vorliegenden Erfindung liegt die Aufgabe zugrunde, eine hydrodynamische Maschine, insbesondere einen hydrodynamischen Retarder, mit einer Ventilationsblende zur Vermeidung von Ventilationsverlusten im ausgeschalteten Zustand der hydrodynamischen Maschine anzugeben, bei welcher die Herstellung der Ventilationsblende kostengünstig möglich ist und zugleich die Ventilationsblende im Betrieb sicher und zuverlässig arbeitet.

Die erfindungsgemäße Aufgabe wird durch eine hydrodynamische Maschine, insbesondere einen hydrodynamischen Retarder, mit den Merkmalen von Anspruch 1 gelöst. In den abhängigen Ansprüchen sind vorteilhafte und besonders zweckmäßige Ausgestaltungen der Erfindung angegeben.

Die erfindungsgemäße hydrodynamische Maschine weist ein Primärrad und ein Sekundärrad auf, die gemeinsam einen torusförmigen, mit Arbeitsmedium zur Ausbildung einer hydrodynamischen Kreislaufströmung befüllbaren Arbeitsraum ausbilden. Wenn in den Arbeitsraum ein flüssiges Arbeitsmedium eingebracht ist, bildet sich eine hydrodynamische Kreislaufströmung des Arbeitsmediums aus und überträgt Drehmoment beziehungsweise Antriebsleistung vom angetriebenen Primärrad auf das Sekundärrad. Wenn die hydrodynamische Maschine als hydrodynamische Kupplung ausgeführt ist, wird hierdurch das Sekundärrad hydrodynamisch angetrieben. Wenn die hydrodynamische Maschine als hydrodynamischer Retarder ausgebildet ist, bei welchem das Sekundärrad stationär ist oder entgegen der Drehrichtung des Primärrades angetrieben wird, wird das Primärrad durch die Drehmomentübertragung hydrodynamisch abgebremst.

Die hydrodynamische Maschine weist eine Ventilationsblende auf, die wahlweise, in der Regel ausschließlich im ausgeschalteten Zustand der hydrodynamischen Maschine, wenn der Arbeitsraum insbesondere vom Arbeitsmedium entleert ist, zumindest teilweise in den Arbeitsraum eingebracht wird, um in dem Arbeitsraum das Ausbilden einer Kreislaufströmung aus Luft und/oder Restarbeitsmedium zu unterbinden.

Erfindungsgemäß umfasst die Ventilationsblende mindestens zwei relativ zueinander verschiebbare Schieber oder ist aus wenigstens zwei solcher Schieber oder genau zwei solcher Schieber gebildet. Jeder Schieber weist jeweils eine Durchgangsöffnung auf. Die Durchgangsöffnungen der verschiedenen Schieber sind durch relatives Verschieben der Schieber mehr oder minder zueinander in Überdeckung bringbar, sodass die von den wenigstens zwei in Strömungsrichtung des Arbeitsmediums im Arbeitsraum hintereinander angeordneten Schiebern, insbesondere unmittelbar hintereinander und aneinander gleitend angeordneten Schiebern ausgebildete gemeinsame Durchgangsöffnung dadurch vergrößerbar ist, dass die Durchgangsöffnungen der einzelnen Schieber durch Verschieben der Schieber mehr zueinander in Überdeckung gebracht werden, und dadurch verkleinerbar ist, dass die Überdeckung der einzelnen Durchgangsöffnungen der verschiedenen Schieber durch Verschieben der Schieber relativ zueinander vermindert wird.

Da die Ventilationsblende dazu dient, im eingeschalteten Zustand der hydrodynamischen Maschine die Kreislaufströmung von Arbeitsmedium im Arbeitsraum möglicht wenig oder vorteilhaft überhaupt nicht zu stören, indem das Arbeitsmedium innerhalb des Arbeitsraumes frei, insbesondere ohne jegliche Umlenkung durch die Ventilationsblende durch die Durchgangsöffnungen der wenigstens zwei Schieber strömen kann, weist jede Durchgangsöffnung eines jeden Schiebers einen freien Querschnitt auf, der wenigstens den Querschnitt des Arbeitsraumes in der Ebene der Verschieberichtung der Schieber überdeckt. In einer ersten relativen Verschiebeposition der Schieber zueinander, in welcher sich die beiden Durchgangsöffnungen der Schieber zueinander mehr überdecken, wird der Querschnitt des Arbeitsraumes demnach vollständiger beziehungsweise vollständig freigegeben, und in einer zweiten relativen Verschiebeposition der Schieber zueinander, in welcher sich die beiden Durchgangsöffnungen weniger überdecken, ist die Gesamtdurchgangsöffnung durch die Ventilationsblende entsprechend kleiner, insbesondere kleiner als der Querschnitt des Arbeitsraumes in der Ebene der Verschieberrichtung der Schieber, sodass die beiden Schieber, oder zumindest einer der beiden Schieber den Querschnitt des Arbeitsraumes wenigstens teilweise versperren/versperrt.

Besonders vorteilhaft weist die Durchgangsöffnung wenigstens eines Schiebers, mehrerer Schieber oder aller Schieber einen vollständig geschlossenen Umfang auf. Hierdurch kann eine besonders große Steifigkeit der Schieber erreicht werden. Die Schieber können besonders dünn, insbesondere aus Blech ausgeführt sein.

Gemäß einer erfindungsgemäßen Ausführungsform weist die Durchgangsöffnung wenigstens eines Schiebers, mehrerer Schieber oder aller Schieber einen kreisrunden Querschnitt auf.

Der Umfang der Durchgangsöffnungen kann dem Umfang des Arbeitsraumes in der Ebene der Verschiebung der Schieber entsprechen oder einen größeren Durchmesser, insbesondere bis zu 10 Prozent größeren Durchmesser aufweisen.

Günstig ist es, wenn die Durchgangsöffnungen jeweils außermittig in die Schieber eingebracht sind, sodass auf einer Seite neben der Durchgangsöffnung in jedem Schieber entsprechend mehr Material zur Verfügung steht, das teilweise in den Arbeitsraum eingeschoben werden kann und in welchem insbesondere ein Antrieb zum Verschieben des Schiebers vorgesehen werden kann.

Vorteilhaft weisen die Schieber einen Antrieb zum linearen Verschieben der Schieber relativ zueinander auf, welcher insbesondere einen exzentrisch angetriebenen und/oder im äußeren Umfang von der Kreisform abweichenden Nocken aufweist, der in eine Antriebsöffnung in einem oder beiden Schiebern eingreift, um durch Verdrehen des Nockens in der Antriebsöffnung einen oder beide Schieber nach Art einer Kulissenführung zu verschieben. Andere Antriebe, die beispielsweise eine reine Verschiebebewegung ausführen, wie Kolben, Zahnstangen usw. sind denkbar.

Ein Antrieb für die Schieber kann beispielsweise elektrisch, magnetisch oder hydraulisch angetrieben beziehungsweise ausgeführt sein.

Günstig ist es, wenn die Schieber eine oder zwei entgegengesetzt zueinander angeordnete in der Verschieberichtung verlaufende, insbesondere lineare Führungskanten aufweisen, die in zugeordneten Aufnahmen gleiten. Zusätzlich oder alternativ können auch die Aufnahmen linear ausgeführt sein.

Gemäß einer erfindungsgemäßen Ausführungsform weisen die Schieber eine zueinander deckungsgleiche Form auf. Insbesondere bei einer außermittigen Anordnung der Durchgangsöffnung in den Schiebern sind die Schieber spiegelbildlich zueinander, das heißt um 180 Grad gedreht zueinander angeordnet.

Von Vorteil ist es, wenn die Schieber unmittelbar aufeinander gleiten. Auch ist es möglich, dass die Schieber aneinander geführt werden. Alternativ oder zusätzlich werden die Schieber in einem umgebenden Bauteil geführt.

Jeder Schieber kann einteilig, insbesondere aus einem einteiligen Blech hergestellt sein. Somit ist eine besonders kostengünstige Herstellung der Ventilationsblende, insbesondere durch Stanzen von Blech und/oder durch Schneiden von Blech, insbesondere mittels Laser, möglich.

Um ein leichtes Aufeinandergleiten der Schieber zu ermöglichen, können einzelne oder alle Schieber mit einer Gleitbeschichtung versehen sein. Auch ist es möglich, die Schieber mit einem zum Grundwerkstoff verschiedenen zweiten Werkstoff zu beschichten, der kavitationsunempfindlich ist.

Wenn die Schieber ohne einen Lötvorgang in der Herstellung auskommen, stehen günstige Materialien zur Herstellung zur Verfügung.

Eine erfindungsgemäße hydrodynamische Maschine, bei welcher das Primärrad und das Sekundärrad eine Vielzahl von über dem Umfang verteilt angeordnete, im Arbeitsraum positionierte Schaufeln aufweisen, kann eine besondere Schaufelgestaltung haben. Beispielsweise sind die einander in Axialrichtung (Richtung der Drehachse) zugewandten Schaufelvorderkanten konvex ausgeführt. Zusätzlich oder alternativ können die Schaufeln in einer Draufsicht aus der Trennebene zwischen dem Primärrad und dem Sekundärrad bogenförmig oder becherförmig gestaltet sein, das heißt, das freie Schaufelende einer jeden Schaufel beschreibt in dieser Draufsicht in Axialrichtung einen Bogen innerhalb der Trennspaltebene. Selbstverständlich können auch andere Schaufelformen gewählt sein, insbesondere mit einem linearen freien Schaufelende, einer geraden Beschaufelung und/oder einer schrägen Beschaufelung. Bei einer schrägen Beschaufelung stehen die Schaufeln in einem spitzen Winkel auf der Trennspaltebene.

Besonders günstig ist es, wenn die Schaufelräder durch Gießen, insbesondere Druckguss herstellbar und ohne verlorenen Kern beziehungsweise aus einer einteiligen Gussform ohne Zerstörung derselben entformbar, insbesondere drehentformbar sind.

Die Erfindung soll nachfolgend anhand von Ausführungsbeispielen exemplarisch beschrieben werden.

Es zeigen:
- Figur 1: den prinzipiellen Aufbau eines hydrodynamischen Retarders;
- Figur 2: eine mögliche Gestaltung der Schaufelform einer hydrodynamischen Maschine;
- Figur 3: eine hydrodynamische Maschine mit zweiteiliger Ventilationsblende;
- Figur 4: eine mögliche Gestaltung der Schaufelvorderkanten;
- Fig. 5 u. 6: ein Ausführungsbeispiel für die Form der Schieber einer zweiteiligen Ventilationsblende;
- Fig. 7 u. 8: beispielhafte Antriebe zum relativen Verschieben der Schieber.

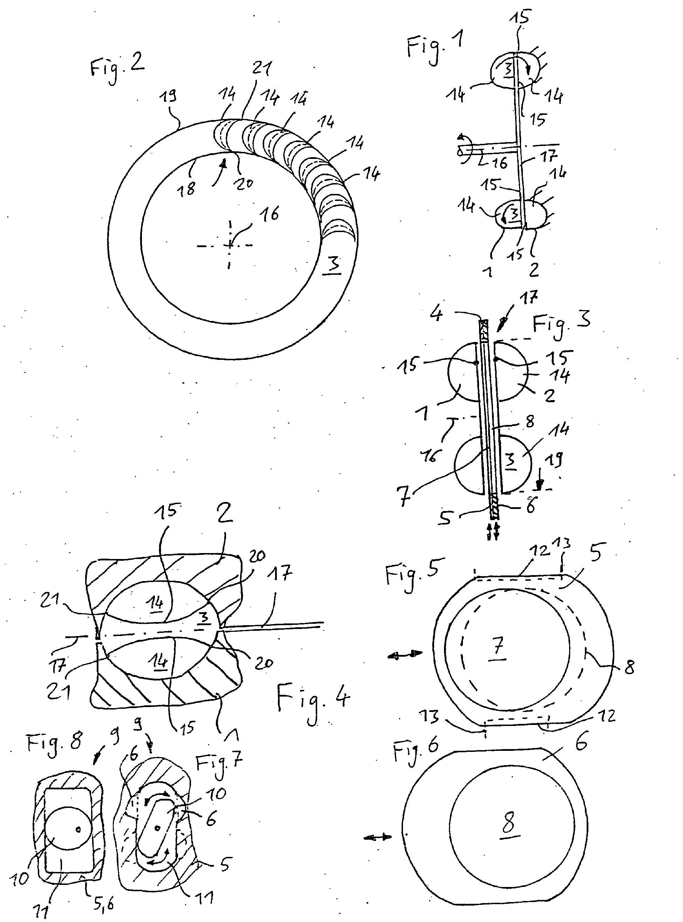

In der Figur 1 ist schematisch ein hydrodynamischer Retarder mit einem umlaufenden ersten Schaufelrad 1 (Primärrard) und einem stationären zweiten Schaufelrad 2 (Sekundärrad) dargestellt. Die beiden Schaufelräder 1, 2 bilden zusammen den torusförmigen Arbeitsraum 3 aus, in dem die Schaufeln 14 jeweils des ersten Schaufelrades 1 und des zweiten Schaufelrades 2 positioniert sind. Die einander zugewandten Schaufelvorderkanten 15 der Schaufeln 14 sind linear und verlaufen in Radialrichtung des hydrodynamischen Retarders. Die Schaufeln 14 können entweder senkrecht auf der Ebene des Trennspaltes 17 zwischen dem ersten Schaufelrad 1 und dem zweiten Schaufelrad 2 stehen, oder bei einer sogenannten schrägen Beschaufelung in einem spitzen Winkel hierzu.

Das erste Schaufelrad 1 dreht sich über der Drehachse 16, wodurch das Arbeitsmedium radial nach außen beschleunigt wird und eine Kreislaufströmung im Arbeitsraum 3 ausbildet, siehe die Pfeile im Arbeitsraum 3. Im zweiten stationären Schaufelrad 2 strömt das Arbeitsmedium radial nach innen, wird dabei verzögert und tritt radial innen wieder in das erste Schaufelrad 1 ein.

Im Trennspalt 17 ist eine Ventilationsblende (in der Figur 1 nicht dargestellt) positioniert, die im ausgeschalteten Zustand des Retarders in den Zwischenraum zwischen den sich in Axialrichtung gegenüberstehenden Schaufeln 14 geschoben wird, um eine Kreislaufströmung von Restarbeitsmedium und/oder Luft, die zu einer unerwünschten Drehmomentübertragung vom ersten Schaufelrad 1 auf das zweite Schaufelrad 2 führt, zu verhindern.

In der Figur 2 ist eine weitere Möglichkeit für die Gestaltung der Schaufeln 14 gezeigt. Nicht alle Schaufeln 14, die über den gesamten Umfang der hydrodynamischen Maschine gemäß der Figur 2 verteilt sind, sind dargestellt. Wie in der Figur 1 reichen die Schaufeln 14 von einem inneren Durchmesser 18 des jeweiligen Schaufelrades zu einem äußeren Durchmesser 19. Zwischen diesen beiden Durchmessern 18, 19 verlaufen die Schaufeln 14 in einer Draufsicht in Richtung der Drehachse 16 bogenförmig von einem radial inneren Schaufelende 20 zu einem radial äußeren Schaufelende 21. Vorliegend, jedoch nicht zwingend, variiert die Dicke der Schaufeln 14, mit der kleinsten Dicke am radial inneren Schaufelende 20 und radial äußeren Schaufelende 21, welche hier spitz zulaufen, und der größten Dicke im Bereich des mittleren Durchmessers zwischen dem inneren Durchmesser 18 und dem äußeren Durchmesser 19. In der Figur 2 ist die Variation der Dicke der Schaufeln 14 über dem Radius des Schaufelrades jedoch zur Verdeutlichung überzogen dargestellt.

Die Bogenform der Schaufeln 14 gemäß der Figur 2 kann einem Kreisbogen entsprechen, insbesondere bezogen auf die dargestellte gestrichelte mittlere Schaufellinie, gegenüber welcher zwei einander entgegenstehende Punkte auf den beiden entgegengesetzten Schaufeloberflächen denselben Abstand haben. Jedoch sind auch andere Bogenformen abweichend von einer Kreisform, beispielsweise eine Parabelform oder noch andere Gestaltungen möglich.

In der Figur 3 ist nun die Ventilationsblende 4, die sich durch den Trennspalt 17 erstreckt, näher gezeigt. Die Ventilationsblende 4 weist zwei Schieber 5, 6 auf, mit jeweils einer Durchgangsöffnung 7, 8. Die beiden Schieber 5, 6 sind relativ zueinander innerhalb des Trennspaltes 17 verschiebbar, zwischen der in der Figur 3 dargestellten ersten relativen Verschiebeposition, in welcher sich die beiden Durchgangsöffnungen 7, 8 vollständig überdecken, und einer zweiten relativen Verschiebeposition, in welcher die Durchgangsöffnungen 7, 8 versetzt zueinander, sich nur teilweise oder nicht überdeckend angeordnet sind.

In der gezeigten ersten relativen Verschiebeposition sind die beiden Durchgangsöffnungen 7, 8 konzentrisch zu der Drehachse 16 positioniert und ihr äußerer Umfang liegt auf dem radial äußeren Durchmesser 19 der Schaufeln 14 oder radial etwas außerhalb hiervon. Somit wird die Arbeitsmediumströmung im Arbeitsraum 3 nicht gestört.

Bei der nicht dargestellten zweiten relativen Verschiebeposition ist zumindest eine der beiden Durchgangsöffnungen 7, 8, vorteilhaft sind beide Durchgangsöffnungen 7, 8 mit ihrem äußeren Umfang versetzt zum radial äußeren Umfang 19 der Schaufeln 14 positioniert, sodass das Material des Schiebers 5, 6, welches die Durchgangsöffnungen 7, 8 umschließt, teilweise in den Arbeitsraum 3 zwischen den sich in Axialrichtung gegenüberstehenden Schaufeln 14 eintaucht.

In dem in der Figur 3 gezeigten Ausführungsbeispiel gleiten die beiden Schieber 5, 6 unmittelbar aufeinander. Alternaiv könnten die Schieber 5, 6 jedoch auch mit einem Abstand zueinander angeordnet sein.

In der Figur 4 sind Schaufeln 14 mit einer bogenförmigen Schaufelvorderkante 15 dargestellt. Wenn die bogenförmigen Schaufelvorderkanten 15, wie dargestellt, konvex ausgeführt sind, ergibt sich ein vergleichsweise großer Abstand zwischen den sich in Axialrichtung (in Richtung der Drehachse) gegenüberstehenden Schaufeln 14 im Bereich ihres radial inneren Schaufelendes 20 und ihres radial äußeren Schaufelendes 21, sodass hier das die Durchgangsöffnungen umgebende Material der Schieber (nicht dargestellt) ohne Kollisionsgefahr eintauchen kann.

In den Figuren 5 und 6 sind beispielhaft mögliche Formen in einer Draufsicht auf die beiden Schieber 5, 6 dargestellt. Die Formen können identisch ausgeführt sein.

In diesem Ausführungsbeispiel sind die beiden Durchgangsöffnungen 7, 8 exzentrisch im Schieber 5, 6 eingebracht. Somit verbleibt in Verschieberichtung (siehe den Doppelpfeil) auf der einen Seite der Durchgangsöffnung 7, 8 mehr Material des Schiebers 5, 6, als auf der anderen Seite.

Die Durchgangsöffnungen 7, 8 sind kreisförmig, sodass sie sich in der in der Figur 3 gezeigten ersten relativen Verschiebeposition vollständig überdecken. In der zweiten relativen Verschiebeposition überdeckt jeweils ein Teil des einen Schiebers 5, 6 einen Teil der Durchgangsöffnung 7, 8 des anderen Schiebers. Zur Verdeutlichung ist in der Figur 5 gestrichelt der Umfang der Durchgangsöffnung 8 des zweiten Schiebers 6 in dieser zweiten relativen Verschiebeposition eingezeichnet.

Die beiden Schieber 5, 6 können insbesondere derart gestaltet sein, dass sich deren äußerer Umfang in der zweiten relativen Verschiebeposition vollständig überdeckt beziehungsweise fluchtend zueinander angeordnet ist.

In den Figuren 7 und 8 sind Ausführungsbeispiele für einen möglichen Antrieb 9 zum insbesondere linearen Verschieben der Schieber 5, 6 dargestellt. Hierzu ist ein von der Kreisform abweichender Nocken 10 (Figur 7) beziehungsweise ein exzentrisch angetriebener Nocken 10 (Figur 8) in einer Antriebsöffnung 11 des Schiebers 5, 6 drehbar angeordnet, welcher zusammen mit dem äußeren Umfang der Antriebsöffnung 11 nach Art einer Kulissenführung arbeitet und dadurch, wenn er verdreht wird, auf den äußeren Umfang der Antriebsöffnung 11 drückt und dadurch den Schieber 5, 6 verschiebt.

Gemäß der Figur 7 betätigt der Nocken 10 beide Schieber 5 und 6 derart, dass er sie bei Drehung in einer ersten Richtung auseinander schiebt und bei Drehung in entgegengesetzter zweiter Richtung wieder ineinander schiebt, siehe den gestrichelt dargestellten Umfang der Antriebsöffnung 11 des zweiten Schiebers 6. Demnach sind die Antriebsöffnungen 11 des ersten Schiebers 5 und des zweiten Schiebers 6 übereinander angeordnet und ein gemeinsamer Nocken 10 greift in diese ein.

Damit sich die Schieber 5, 6 nur linear verschieben, können, wie in der Figur 5 angedeutet, lineare Führungskanten 12, die in Verschieberichtung verlaufen und an Aufnahmen 13 gleiten, vorgesehen sein.

## Patentansprüche

1. Hydrodynamische Maschine, insbesondere hydrodynamischer Retarder,
1.1 mit einem Primärrad (1) und einem Sekundärrad (2), die gemeinsam einen torusförmigen, mit Arbeitsmedium zur Ausbildung einer hydrodynamischen Kreislaufströmung befüllbaren Arbeitsraum (3) ausbilden;
1.2 mit einer Ventilationsblende (4), die wahlweise zumindest teilweise in den Arbeitsraum (3) einbringbar ist, um im vom Arbeitsmedium entleerten Zustand des Arbeitsraumes (3) das Ausbilden einer Kreislaufströmung aus Luft und/oder Restarbeitsmedium zu unterbinden; wobei
1.3 die Ventilationsblende (4) mindestens zwei relativ zueinander in der Ebene verschiebbare Schieber (5, 6) umfasst, und
1.4 die jeweils eine Durchgangsöffnung (7, 8) aufweisen, wobei die Durchgangsöffnungen (7, 8) durch relatives Verschieben der Schieber (5, 6) mehr oder minder zueinander in Überdeckung bringbar sind;
**dadurch gekennzeichnet, dass**
- 1.5 jede Durchgangsöffnung (7, 8) einen freien Querschnitt aufweist, der wenigstens den Querschnitt des Arbeitsraumes (3) in der Ebene der Verschieberichtung der Schieber (5, 6) überdeckt, sodass in einer ersten relativen Verschiebeposition der Schieber (5, 6) zueinander die beiden Durchgangsöffnungen (7, 8) einander mehr überdecken und den Querschnitt des Arbeitsraumes (3) freigeben und in einer zweiten relativen Verschiebeposition der Schieber (5, 6) zueinander die beiden Durchgangsöffnungen (7, 8) einander minder überdecken und die Schieber (5, 6) oder wenigstens einer der beiden Schieber (5, 6) den Querschnitt des Arbeitsraumes (3) wenigstens teilweise versperren/versperrt.

2. Hydrodynamische Maschine gemäß Anspruch 1, **dadurch gekennzeichnet, dass** die Durchgangsöffnungen (7, 8) einen vollständig geschlossenen Umfang aufweisen.

3. Hydrodynamische Maschine gemäß einem der Ansprüche 1 oder 2, **dadurch gekennzeichnet, dass** die Durchgangsöffnungen (7, 8) einen kreisrunden Querschnitt aufweisen, dessen Umfang insbesondere dem Umfang des Arbeitsraumes (3) in der Ebene der Verschiebung der Schieber (5, 6) entspricht.

4. Hydrodynamische Maschine gemäß einem der Ansprüche 1 bis 3, **dadurch gekennzeichnet, dass** die Durchgangsöffnungen (7, 8) jeweils außermittig in die Schieber (5, 6) eingebracht sind.

5. Hydrodynamische Maschine gemäß einem der Ansprüche 1 bis 4, **dadurch gekennzeichnet, dass** den Schiebern (5, 6) ein Antrieb (9) zum linearen Verschieben der Schieber (5, 6) relativ zueinander zugeordnet ist, welcher insbesondere einen exzentrisch angetriebenen und/oder im äußeren Umfang von der Kreisform abweichenden Nocken (10) aufweist, der in eine Antriebsöffnung (11) in einem oder beiden Schiebern (5, 6) eingreift, um durch Verdrehen des Nockens (10) in der Antriebsöffnung (11) einen oder beide Schieber (5, 6) nach Art einer Kulissenführung zu verschieben.

6. Hydrodynamische Maschine gemäß Anspruch 5, **dadurch gekennzeichnet, dass** der Antrieb (9) elektrisch, magnetisch oder hydraulisch angetrieben ist.

7. Hydrodynamische Maschine gemäß einem der Ansprüche 1 bis 6, **dadurch gekennzeichnet, dass** die Schieber (5, 6) in Verschieberichtung verlaufende, insbesondere lineare Führungskanten (12) aufweisen, die in zugeordneten, insbesondere linearen Aufnahmen (13) gleiten.

8. Hydrodynamische Maschine gemäß einem der Ansprüche 1 bis 7, **dadurch gekennzeichnet, dass** die Schieber (5, 6) eine zueinander deckungsgleiche Form aufweisen und insbesondere spiegelbildlich oder um 180 Grad gedreht zueinander angeordnet sind.

9. Hydrodynamische Maschine gemäß einem der Ansprüche 1 bis 8, **dadurch gekennzeichnet, dass** die Schieber (5, 6) unmittelbar aufeinander gleiten.

10. Hydrodynamische Maschine gemäß einem der Ansprüche 1 bis 9, **dadurch gekennzeichnet, dass** jeder Schieber (5, 6) aus einem einteiligen Blech hergestellt ist.

11. Hydrodynamische Maschine gemäß einem der Ansprüche 1 bis 10, **dadurch gekennzeichnet, dass** das Primärrad (1) und das Sekundärrad (2) eine Vielzahl von über dem Umfang verteilt angeordnete, im Arbeitsraum (3) positionierte Schaufeln (14) aufweisen, deren einander zugewandte Schaufelvorderkanten (15) konvex ausgeführt sind.

## Claims

1. A hydrodynamic machine, in particular a hydrodynamic retarder,
1.1 having a primary wheel (1) and a secondary wheel (2), which form together a toroidal working chamber (3) which can be filled with working medium for forming a hydrodynamic circular flow;
1.2 having a ventilation orifice (4), which may be inserted at choice at least partially into the working chamber (3), to prevent the formation of a circular flow of air and/or residual working medium when the working chamber (3) is emptied of working medium; wherein
1.3 the ventilation orifice (4) includes at least two pushers (5, 6) which can be shifted relative to one another in the plane, and
1.4 which each have a passage opening (7, 8), whereas the passage openings (7, 8) can be brought into overlapping position more or less relative to one another by relative shifting of the pushers (5, 6);
**characterised in that**
1.5 each passage opening (7, 8) has a free cross-section, which covers at least the cross-section of the working chamber (3) in the plane of the shifting direction of the pushers (5, 6), so that in a first relative shifting position of the pushers (5, 6) to one another the two passage openings (7, 8) overlap each other more and release the cross-section of the working chamber (3) and in a second relative shifting position of the pushers (5, 6) to one another the two passage openings (7, 8) overlap each other less and the pushers (5, 6) or at least one of the two pushers (5, 6) block/blocks the cross-section of the working chamber (3) at least partially.

2. The hydrodynamic machine according to claim 1, **characterised in that** the passage openings (7, 8) have a completely closed circumference.

3. The hydrodynamic machine according to one of claims 1 or 2, **characterised in that** the passage openings (7, 8) have an circular cross-section, whose circumference corresponds in particular to the circumference of the working chamber (3) in the plane of shifting of the pushers (5, 6).

4. The hydrodynamic machine according to one of claims 1 to 3, **characterised in that** the passage openings (7, 8) respectively are provided eccentrically into the pushers (5, 6).

5. The hydrodynamic machine according to one of claims 1 to 4, **characterised in that** a drive unit (9) is associated with the pushers (5, 6) for linear shifting of the pushers (5, 6) relative to one another, which drive unit (9) exhibits in particular a cam (10) which is driven eccentrically and/or deviates from the circular shape in the external circumference, which engages into a drive opening (11) in one or both pushers (5, 6), to shift one or both pushers (5, 6) in the form of a sliding block guide by rotating the cam (10) in the drive opening (11).

6. The hydrodynamic machine according to claim 5, **characterised in that** the drive unit (9) is driven electrically, magnetically or hydraulically.

7. The hydrodynamic machine according to one of claims 1 to 6, **characterised in that** the pushers (5, 6) include guide edges (12) extending in the shifting direction, in particular linearly guide edges, which slide in associated, in particular linear receptacles (13).

8. The hydrodynamic machine according to one of claims 1 to 7, **characterised in that** the pushers (5, 6) have a congruent shape relative to one another and are arranged in particular as mirror images or rotated by 180° relative to one another.

9. The hydrodynamic machine according to one of claims 1 to 8, **characterised in that** the pushers (5, 6) slide directly on one another.

10. The hydrodynamic machine according to one of claims 1 to 9, **characterised in that** each pusher (5, 6) is made of a one-piece metal sheet.

11. The hydrodynamic machine according to one of claims 1 to 10, **characterised in that** the primary wheel (1) and the secondary wheel (2) have a plurality of blades (14) distributed over the circumference, positioned in the working chamber (3), whose blade front edges (15) facing one another are designed convex.

## Revendications

1. Machine hydrodynamique, en particulier retardateur hydrodynamique,
1.1 muni d'une roue primaire (1) et d'une roue secondaire (2), formant ensemble une chambre de travail (3) toroïdale, pouvant être remplie de fluide de travail pour constituer un écoulement circulaire hydrodynamique;
1.2 présentant un diaphragme de ventilation (4), que l'on peut introduire au choix au moins partiellement dans la chambre de travail (3) pour empêcher la formation d'un écoulement circulaire à partir de l'air et/ou du fluide de travail résiduel en état que la chambre de travail (3) est vidée de fluide de travail; dans laquelle
1.3 le diaphragme de ventilation (4) comprend au moins deux poussoirs (5, 6) mobiles l'un par rapport à l'autre dans le plan, et
1.4 qui chacune présent une ouverture de passage (7, 8) où les ouvertures de passage (7, 8) peuvent être amenées en position de chevauchement plus ou moins l'un par rapport à l'autre par déplacement relatif des poussoirs (5, 6); **caractérisée en ce que**
1.5 chaque ouverture de passage (7, 8) présente une section libre, qui recouvre au moins la section de la chambre de travail (3) dans le plan de la direction de déplacement des poussoirs (5, 6) de sorte que dans une première position de déplacement relative des poussoirs (5, 6) l'un par rapport à l'autre, les deux ouvertures de passages (7, 8) se recouvrent davantage et libèrent la section de la chambre de travail (3) et dans une seconde position de déplacement relative des poussoirs (5, 6) l'un par rapport à l'autre les deux ouvertures de passage (7, 8) se recouvrent moins et les poussoirs (5, 6) ou au moins l'un des deux poussoirs (5, 6) bloque/bloquent la section de la chambre de travail (3) au moins partiellement.

2. Machine hydrodynamique selon la revendication 1, **caractérisée en ce que** les ouvertures de passage (7, 8) présentent une circonférence complètement fermée.

3. Machine hydrodynamique conformément à l'une des revendications 1 ou 2, **caractérisée en ce que** les ouvertures de passage (7, 8) présentent une section circulaire, dont la circonférence correspond en particulier à la circonférence de la chambre de travail (3) dans le plan de déplacement des poussoirs (5, 6).

4. Machine hydrodynamique conformément à l'une des revendications 1 à 3, **caractérisée en ce que** les ouvertures de passage (7, 8) sont insérées chacune de manière excentrée dans les poussoirs (5, 6).

5. Machine hydrodynamique conformément à l'une des revendications 1 à 4, **caractérisée en ce qu'**un système d'entraînement (9) est associé aux poussoirs (5, 6) pour assurer le déplacement linéaire des poussoirs (5, 6) l'un par rapport à l'autre, le système présentant en particulier une came (10) entraînée de manière excentrique et/ou qui differére dans la circonférence externe de la forme circulaire, la came s'engrènant dans une ouverture d'entraînement (11) dans un ou les deux poussoirs (5, 6), pour décaler un ou les deux poussoirs (5, 6) à la manière d'un guide à coulisse par rotation de la came (10) dans l'ouverture d'entraînement (11).

6. Machine hydrodynamique selon la revendication 5, **caractérisée en ce que** le système d'entraînement (9) est entraîné électriquement, magnétiquement ou hydrauliquement.

7. Machine hydrodynamique conformément à l'une des revendications 1 à 6, **caractérisée en ce que** les poussoirs (5, 6) présentent des tranches de guidage (12) s'étendant dans la direction de déplacement, en particulier des tranches de guidage linéaires, glissant dans des réceptacles (13) associés, en particulier linéraires.

8. Machine hydrodynamique conformément à l'une des revendications 1 à 7, **caractérisée en ce que** les poussoirs (5, 6) présentent une forme congruente l'un par rapport à l'autre et sont agencés en particulier de manière symétrique ou bien tournés à 180° l'un par rapport à l'autre.

9. Machine hydrodynamique conformément à l'une des revendications 1 à 8, **caractérisée en ce que** les poussoirs (5, 6) glissent directement l'un sur l'autre.

10. Machine hydrodynamique conformément à l'une des revendications 1 à 9, **caractérisée en ce que** chaque poussoir (5, 6) est constitué d'une plaque d'une seule pièce.

11. Machine hydrodynamique conformément à l'une des revendications 1 à 10, **caractérisée en ce que** la roue primaire (1) et la roue secondaire (2) présentent une pluralité d'aubes (14) réparties sur la circonférence, positionnées dans la chambre de travail (3), les aubes dont les tranches avant (15) tournées l'une vers l'autre sont convexes.
